# EUROPÄISCHE PATENTANMELDUNG

(11) **EP 3 236 046 A1**
(43) Veröffentlichungstag der Anmeldung: **25.10.2017**
(21) Anmeldenummer: 17000551.6
(22) Anmeldetag: 03.04.2017
(51) Int. Cl.: F02B 61/04

(54) **BRENNKRAFTMASCHINE FÜR EINEN AUSSENBORDMOTOR**

(30) Priorität: 24.04.2016 DE 102016004763
(71) Anmelder: Neander Motors AG, 24143 Kiel (DE)
(72) Erfinder: BRÜSTLE, Claus, D-74228 Nordheim (DE); DAVIS, Richard, Nequon, WI 53092 (US)

(57) **Zusammenfassung**

Dies Brennkraftmaschine ist für einen Außenbordmotor zum Antrieb eines Schiffs mit einem Luftführungssystem bestimmt, das unter Vermittlung von einer Oberflächen der Brennkraftmaschine und Nebenaggregate umgebenden Abdeckhaube wirksam ist, welche Abdeckhaube mit einer oder mehreren Ein- und Auslassöffnungen für in einem Innenraum der Abdeckhaube bewegte Luftströme versehen ist, wobei ein über die Brennkraftmaschine angetriebenes Gebläse die Luftströme im Innenraum der Abdeckhaube zumindest teilweise beeinflusst werden.

Zur Optimierung des Außenbordmotors dringen über eine Einlassöffnung und eine daran anschließende erste Leiteinrichtung Luftströme in den Innenraum der Abdeckhaube Luftströme ein, und das Luftführungssystem fungiert in der Weise, dass mit Unterstützung des Gebläses ein Teil der Luftströme die Oberflächen der Brennkraftmaschine und der Nebenaggregate beaufschlagt und ein anderer Teil der Luftströme als Ansaugluft mittels einer zweiten Leiteinrichtung an eine Sauganlage der Brennkraftmaschine gelangt, wobei die von den Oberflächen der Brennkraftmaschine und den Nebenaggregaten erwärmten Luftströme vom Gebläse und eine dritte Leiteinrichtung als Abluft über eine Auslassöffnung in der Abdeckhaube an eine Außenseite dieser Abdeckhaube gefördert wird.

## Beschreibung

Die Erfindung bezieht sich auf eine Brennkraftmaschine für einen Außenbordmotor mit einem Luftführungssystem nach dem Oberbegriff des Patentanspruchs 1.

Es ist eine Brennkraftmaschine bekannt, US 6,302,749 B1, die als Außenbordmotor zum Antrieb eines Wasserfahrzeugs arbeitet. Die Brennkraftmaschine wird von einer Abdeckhaube umgeben, die einen Innenraum begrenzt. Zur Be- und Entlüftung des Innenraums sind an der die Brennkraftmaschine weitreichend umhüllenden Abdeckhaube Ein- und Auslasseinrichtungen für im Innenraum bewegte zur Beaufschlagung von Gehäuseoberflächen der Brennkraftmaschine dienende Luftströme vorgesehen. Die Brennkraftmaschine umfasst eine aufrecht stehende mit mehreren Kolben zusammenwirkende Kurbelwelle, die an einem oberen Endbereich mittels eines Endlostriebs Ausgleichswellen antreibt. Eine Lichtmaschine mit aufrechter Drehachse ist mit einem Gebläse versehen, das den Innenraum einer haubenartigen Endlostriebabdeckung be- und entlüftet.

Die DE 102 05 109 B4 gibt einen Außenbordmotor wieder, der mit einer senkrecht ausgerichteten Kurbelwelle und mehreren an einer Außenseite eines Maschinengehäuses des Außenbordmotors angebrachten Nebenaggregaten versehen ist. Eine Abdeckhaube umhüllt den Außenbordmotor bzw. die Nebenaggregate. An einer rückwärtigen Seite der Abdeckhaube sind Lufteinlassschlitze vorgesehen, die mit einer angrenzenden Luftleitvorrichtung zusammenwirken. Die Luftleitvorrichtung sorgt dafür, dass Frischluft in einen oberen und einen unteren Bereich des Innenraums der Abdeckhaube bzw. an das Maschinengehäuse und an die Nebenaggregate geleitet wird.

Aufgabe der Erfindung ist es, eine Brennkraftmaschine für einen Außenbordmotor zum Antrieb eines Schiffs zu konzipieren, bei dem im Innenraum einer die Brennkraftmaschine umgebenden Abdeckhaube ein sich bezüglich der Kühlluft- und der Ansaugluftversorgung für die Brennkraftmaschine dienendes und Maßstäbe setzendes Luftführungssystem vorgesehen ist. Dabei sollte aber auch sichergestellt sein, dass das Luftführungssystem mit vertretbaren Mitteln umsetzbar ist.

Erfindungsgemäß wird diese Aufgabe durch die Merkmale des Patentanspruchs 1 gelöst. Weitere, die Erfindung ausgestaltende Merkmale sin in den Unteransprüchen enthalten.

Die mit der Erfindung hauptsächlich erzielten Vorteile sind darin zu sehen, dass das Luftführungssystem, das in Verbindung mit der mittels der Abdeckhaube verkleideten Brennkraftmaschine des Außenbordmotors, sich durch eine vorbildliche Funktion und leichte Umsetzbarkeit auszeichnet. So werden mit dem Luftführungssystem im Innenraum der mit den Einlass- und Auslassöffnungen versehenen Abdeckhaube und durch Unterstützung des Gebläses die Luftströme in besagtem Innenraum gezielt gesteuert. Dabei werden die über die Einlassöffnungen eintretenden Luftströme unter Vermittlung der ersten leicht darstellbaren Leiteinrichtung systemunterstützend in den Innenraum gelenkt. Ein Teil dieser Luftströme beaufschlagen zur vorbildlichen Kühlung die Oberflächen der Gehäuse der Brennkraftmaschine und deren Nebenaggregate. Und ein anderer Teil der Luftströme wird über eine einfache zweite Leiteinrichtung der Sauganlage zugeführt. Darüber hinaus sichert das Luftführungssystem, dass die Luftströme, die die Oberflächen der Brennkraftmaschine bzw. der daran befestigten Nebenaggregate geschickt kühlen. D.h. es werden besagte Luftströme auf einfallsreich Weise vom Gebläse angesaugt, und sie gelangen als Abluft über die Auslassöffnung in die Atmosphäre. Leicht verwirklichbar ist die Einlassöffnung in der Mittelängsebene des Außenbordmotors, und zwar an dem oberen Endbereich der hinteren aufrechten Haubenwand der Abdeckhaube, wobei die erste Leiteinrichtung von der Einlassöffnung sich in Richtung einer Unterseite der Brennkraftmaschine erstreckt und einen Überstrombereich zum Innenraum hin aufweist. Hervorzuheben ist, dass die Leiteinrichtung durch einen Haubenabschnitt der aufrechten Haubenwand und eine Innenwand gebildet wird, welche Haubenwand und Innenwand eine Art Kanal darstellen.

Eine wegweisende Lösung des Lüftungssystems ist, dass das Gebläse unter Vermittlung einer aufrechten über die Oberseite der Brennkraftmaschine hinausragenden aufrechten Kurbelwelle der Brennkraftmaschine angetrieben wird. Funktionsgerecht ist, dass in Fahrtrichtung des Schiffs betrachtet, die Einlassöffnung an der hinteren Haubenwand und das Gebläse benachbart einer vorderen Haubenwand der Abdeckhaube angeordnet ist, was ein gewolltes, entwärmendes Vorbeistreichen der Luftströme an den Oberflächen bewirkt. Sinnvoll ist, dass die das Gebläse antreibende Kurbellwelle zusammen mit einer weiteren parallel zu letzteren verlaufenden Kurbelwelle ein Kurbelwellensystem der Brennkraftmaschine bildet, bei dem die Kurbelwellen über zwei Pleuel mit wenigstens einem Hubkolben in Wirkverbindung stehen. Diese Konstruktion optimierend ist, wenn die quer zur Fahrtrichtung angeordneten Kurbelwellen, an ihren oberen über die Stirnwand der Brennkraftmaschine hinausragenden Enden erste und zweite Schwungräder aufweisen, die in der Höhe der der Kurbelwellen betrachtet versetzt zueinander angeordnet sind und sich gegenseitig überlappen, wobei das Gebläse mit dem ersten oberen Schwungrad vereinigt ist, das somit neben seiner Funktion als Speicher von Rotationsenergie auch noch als Antriebsmittel für das Gebläse wirksam ist.

Ein Vorteil bitet die technische Lösung, bei der das obere Schwungrad mit Gebläse und das zweite untere Schwungrad mittels eines oberen Haubenabschnitts und eines unteren Haubenabschnitts verkleidet sind, die als eine aus einem Stück hergestellte oder aus mehreren Teilen bestehende Gebläse-Schwungradabdeckung ausgebildet sind. Besonders durchdacht ist auch, dass der erste das Gebläse verkleidende zylindrische Haubenabschnitt mit der dritten Leiteinrichtung versehen ist, der über einen spiralartigen Tangentialabschnitt die vom Gebläse geförderte Abluft über die Auslassöffnung in die Atmosphäre führt. Dazu zählt auch, dass der untere Haubenabschnitt an einer horizontalen Abdeckwand ein oder mehrere Durchgangsöffnungen z.B. in Form von Entlüftungsschlitzen aufweist. Eine gute Funktion des Gebläses wird erreicht, wenn es ein Laufradsystem mit gemischter Strömung, Radialströmung oder dgl. umfasst.

Baulich und funktionell geschickt ist, dass die zweite Leitungseinrichtung zur Sauganlage der Brennkraftmaschine hin ein Rohrelement umfasst, das sich zwischen der Unterseite des Innenraums der Abdeckhaube und der an eine Oberseite der Brennkraftmaschine liegenden Sauganlage erstreckt. Dies wird dadurch unterstützt, dass die als Rohrelement ausgebildete zweite Leitungseinrichtung mit an einen mit der Sauganlage verbundenen Verdichter einer Abgasturboladereinrichtung der Brennkraftmaschine angeschlossen ist und dass ein benachbart der Unterseite des Innenraum der Abdeckhaube verlaufender Rohrabschnitt mit wenigstens einer Eintrittsöffnung versehen ist.

Schließlich ist das Verfahren zum Betrieb des Luftführungssystems im Innenraum der Abdeckhaube des Außenbordmotors eine ingeniöse Leistung, weil sie über Ein- und Auslassöffnungen in der Abdeckhaube, den wirkungsgerecht eingesetzten Leiteinrichtungen und dem Gebläse an dem Schwungrad der Kurbelwelle sich durch einen hochrangigen Wirkungsgrad auszeichnet.

In der Zeichnung ist ein Ausführungsbeispiel der Erfindung dargestellt, das nachstehend näher beschrieben wird.

Es zeigen
Fig. 1 eine schematische Seitenansicht eines Außenbordmotors mit einer Brennkraftmaschine, einer Abdeckhaube und einem Luftführungssystem,
Fig. 2 eine schematische Ansicht von oben auf ein Kurbelwellensystem der Brennkraftmaschine,
Fig. 3 eine Seitenansicht des Außenbordmotors teilweise im Schnitt,
Fig.4 eine Schrägansicht von oben rechts auf die Brennkraftmaschine mit Einzelheiten des Luftführungssystems gemäß Fig. 1,

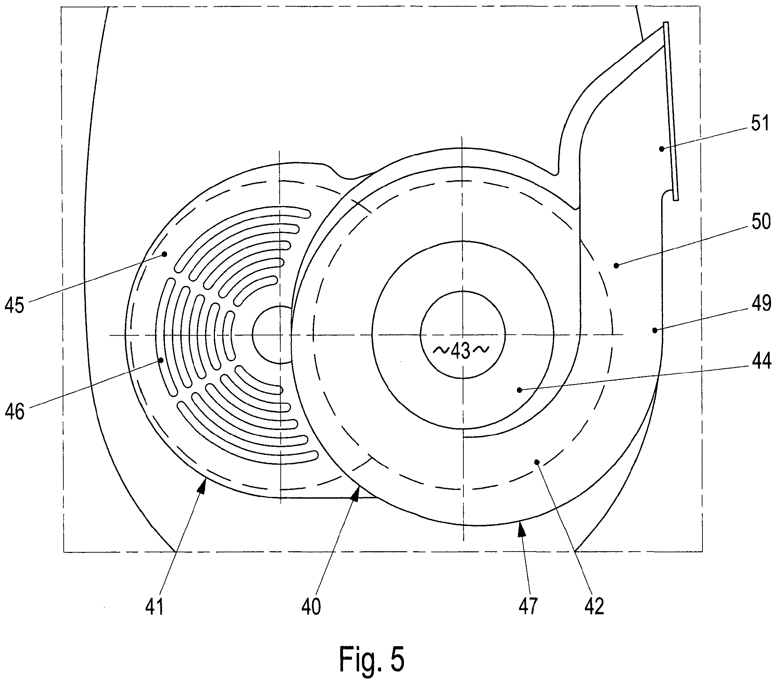

Fig. 5 eine Schrägansicht von vorne oben auf eine Gebläse-Schwungradabdeckung,
Fig.6 eine Schrägansicht von hinten rechts oben auf die Brennkraftmaschine mit einer Leiteinrichtung für Ansaugluft und der Gebläse-Schwungradabdeckung nach Fig. 4,
Fig. 7 eine Schrägansicht von hinten links auf die Brennkraftmaschine mit Leiteinrichtung und Gebläse-Schwungradabdeckung,
Fig. 8 eine Schrägansicht von hinten links auf die Abdeckhaube des Außenbordmotors.

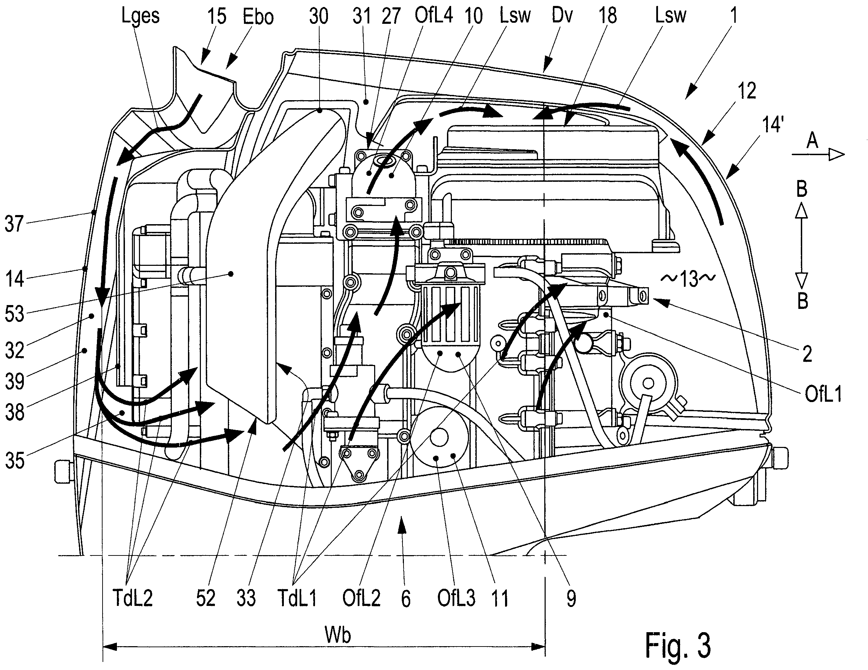

Ein Außenbordmotor 1 zum Antrieb eines nicht näher dargestellten Schiffs in Gewässern. Der Außenbordmotor 1 umfasst eine Brennkraftmaschine 2, die in Fahrtrichtung A des Schiffs betrachtet eine Rückseite 3, eine Vorderseite 4 und in Höhenrichtung B-B gesehen eine Oberseite 5 und eine Unterseite 6 aufweist. Darüber hinaus wird die Brennkraftmaschine 2 von einer linken Längsseite 7 und einer rechten Längsseite 8 begrenzt. An den Längsseiten 7 und 8 sind mehrere Nebenaggregate z.B. 9, 10 und 11-Fig. 3-angebaut, die nicht näher erörtert werden.

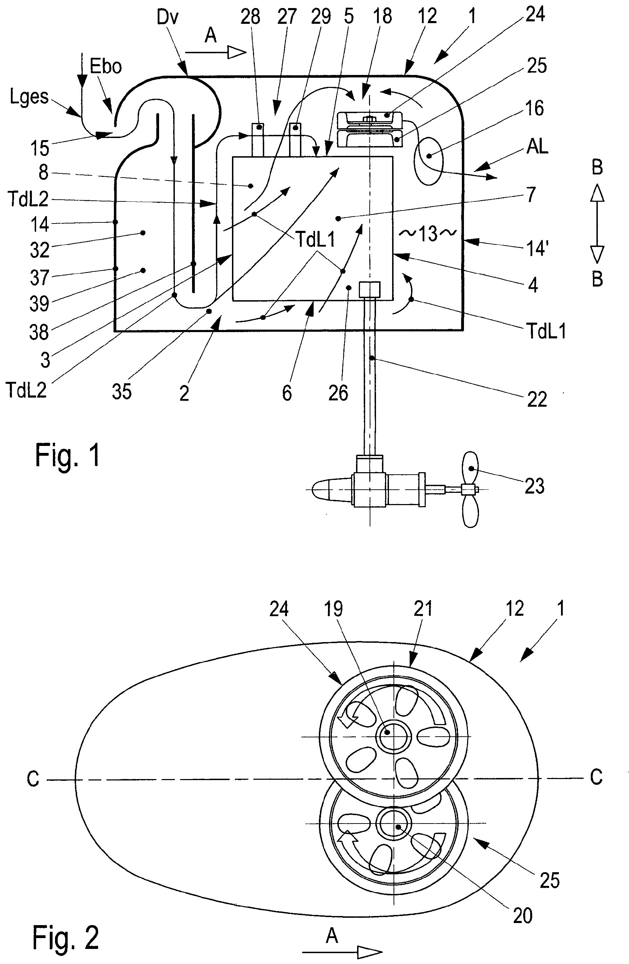

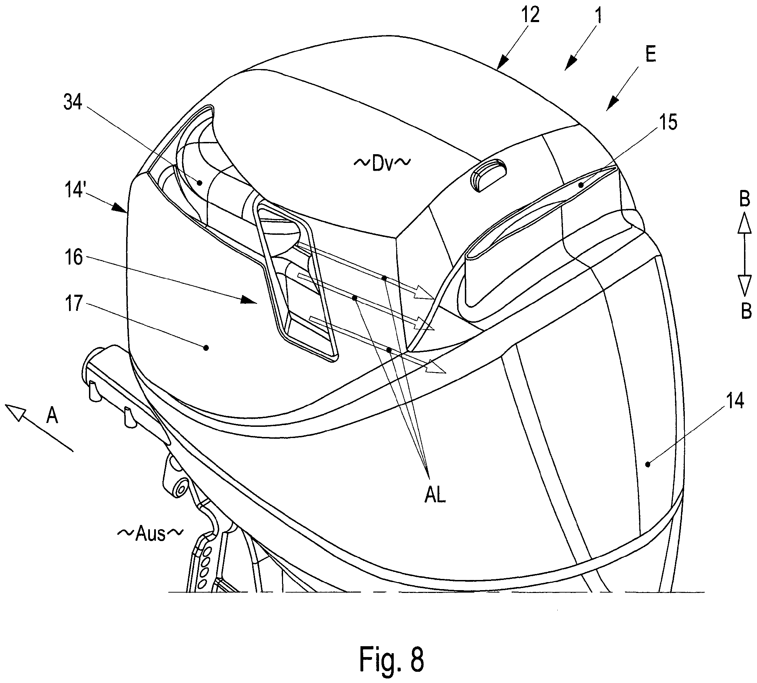

Eine Abdeckhaube 12 umgibt die Brennkraftmaschine 2 mit ihren Nebenaggregaten 9, 10 und 11 bzw. deren Oberflächen, und sie bildet einen Innenraum 13. An einer der Rückseite 3 benachbarten aufrechten ersten hinteren Haubenwand 14 der Abdeckhaube 12 ist eine Einlassöffnung 15 eingerichtet, über die gesamte Luftströme Lges in den Innenraum 13 der Abdeckhaube 12 einströmen. Letztere weist dazu noch eine Auslassöffnung 16 -Fig. 1 und 8- für Abluftströme AL auf, die in eine aufrechte, linke seitliche Haubenwand 17 eingearbeitet ist, und zwar mit definiertem Abstand zur hinteren Haubenwand 14. Zum Bewegen der Luftströme Lges dient ein an der Oberseite 5 der Brennkraftmaschine 2 angeordnetes Gebläse 18 -Fig. 1, 3 und 4-, das von der Letzteren angetrieben wird. Eine vordere Haubenwand trägt das Bezugszeichen 14' -Fig. 1 und 2-.

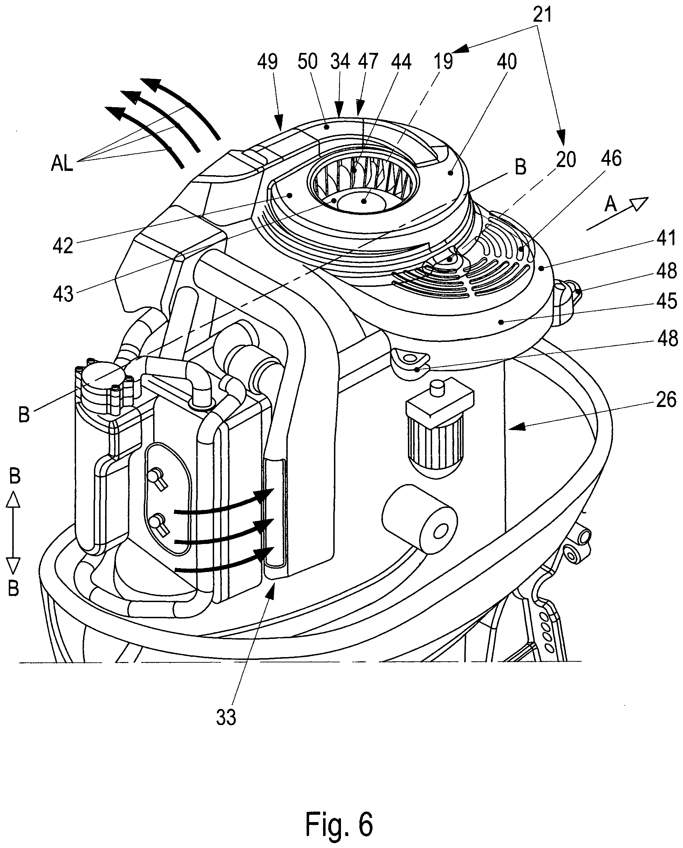

Die Brennkraftmaschine 2 der Hubkolbenbauart verfügt über wenigsten einen Hubkolben, der unter Vermittlung von zwei Pleueln mit zwei parallel zueinander ausgerichteten und in gegenläufigen Drehrichtungen rotierenden ersten und zweiten Kurbelwellen 19 und 20 in Wirkverbindung stehen. Die ersten und zweiten Kurbelwellen 19 und 20 eines Kurbelwellensystems 21 -Fig. 2 und 6- stehen relativ aufrecht zu einer nicht gezeigten Wasserlinie des Schiffs und treiben mittels einer Antriebswelle 22 unterhalb einer Wasserlinie eine Schiffsschraube 23 -Fig. 1- an. Die Kurbelwellen 19 und 20 ragen über die Oberseite 5 der Brennkraftmaschine 1 hinaus, liegen quer zur Fahrtrichtung A symmetrisch zu einer Mittellängsebene C-C - Fig. 2- der Brennkraftmaschine 2 nebeneinander, und sie sind an Endbereichen mit ersten und zweiten Schwungrädern 24 und 25 Fig. 1 und 2- versehen. In Höhenrichtung B-B betrachtet sind das erste Schwungrad 24 und das zweite Schwungrad 25 versetzt zueinander an den Kurbelwellen 19 und 20 befestigt, wobei sie sich aus raumsparenden Gründen bereichsweise gegenseitig überlappen. Das erste Schwungrad 24 liegt über dem zweiten Schwungrad 25, welches erste Schwungrad 24 das Gebläse 18 trägt -Fig.1-.

Die Brennkraftmaschine 2 nimmt mit einem Gehäuse 26 die Kurbelwellen 19 und 20 auf, und die Brennkraftmaschine 2 arbeitet nach dem Diesel Einspritzverfahren, wobei zu ihrer Betriebsoptimierung eine Abgasturboladereinrichtung 27 mit Verdichter 28 und Abgasturbine 29 vorgesehen ist. Die Abgasturboladereinrichtung 27 ist mit einer Sauganlage 30 der Brennkraftmaschine 2 verbunden, welche Abgasturboladereinrichtung 27 und Sauganlage 30 an der Oberseite 5 der Brennkraftmaschine 1 angeordnet sind, und zwar unweit der der hintern Haubenwand 14 der Abdeckhaube 12. Weitere Details der Brennkraftmaschine 2 sind der, eine ähnliche Brennkraftmaschine behandelnden, EP 2 980 374 A1 zu entnehmen.

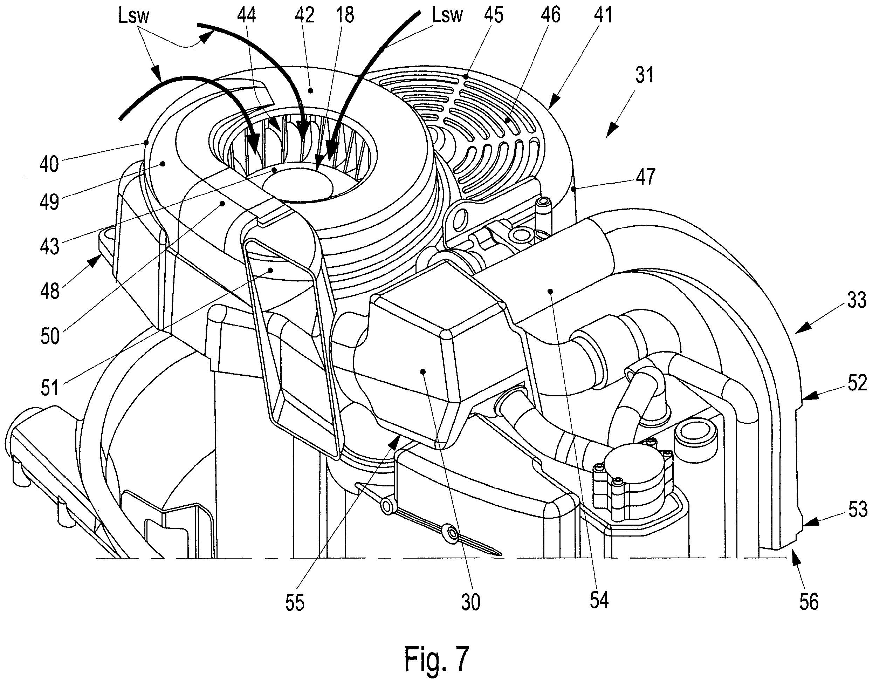

Zusammen mit den Einlassöffnung 15, der Auslassöffnung 16 und dem Gebläse 18 ist im Innenraum 13 der Abdeckhaube 12 ein Luftführungssystem 31 wirksam. Dabei gelangen die über die Einlassöffnung 15 eintretenden gesamten Luftströme Lges in eine an diese Einlassöffnung 15 anschließende erste Leiteinrichtung 32, von wo aus mit Unterstützung des Gebläses 18 ein erster Teil der Luftströme TdL1 betriebserwärmte Oberflächen z.B. OfL1, OfIL2, OfL3 und OfL4 der Brennkraftmaschine 1 bzw. Nebenaggregate 9, 10 und 11 beaufschlagen. Ein anderer zweiter Teil der Luftströme TdL2 erreicht als Ansaugluft mittels einer zweiten Leiteinrichtung 33 die Sauganlage 30 der Brennkraftmaschine 1. Von den Oberflächen OfL1 bis OfL4 der Brennkraftmaschine 1 bzw. der Nebenaggregate 9, 10 und 11 erwärmten Luftströme Lsw -Fig. 3 und 7- werden vom Gebläse 18 sowie einer dritten Leiteinrichtung 34 als Abluft AL über die Auslassöffnung 16 in der Haubenwand 17 der Abdeckung 12 an ein Außenseite Aus von letztere bzw. in die Atmosphäre gefördert.

Die Einlassöffnung 15 ist an einem oberen Endbereich Ebo benachbart einer oberen Deckenverkleidung Dv der Haubenwand 14 angeordnet, und die erste Leiteinrichtung 32 erstreckt von der Einlassöffnung 15 aufrecht in Richtung Unterseite 6 der Brennkraftmaschine 2. Benachbart dieser Unterseite 6 weist die Leiteinrichtung 32 einen Überströmbereich 35 -Fig. 1 und 3- hin zum Innenraum 13 auf. Die erste Leiteinrichtung 32 wird durch einen Haubenwandabschnitt 37 der Haubenwand 14 und eine aufrechte Innenwand 38 der Abdeckhaube 12 gebildet; Haubenabschnitt 37 und einen Innenwand 38 formen einen Zuströmkanal 39 -Fig. 1 und 3-.

Zum Antrieb des Gebläses 18 dient die Kurbelwelle 19 bzw. das Schwungrad 24, welche Kurbelwelle 19 und welches Schwungrad 24 über die Oberseite 5 der Brennkraftmaschine 2 hinausragen. Das Gebläse 18 und das Schwungrad 24 sind baulich vereinigt, anders ausgedrückt sie bilden bspw. nach Art eines Moduls eine vorgefertigte Baueinheit. Um eine effiziente Beeinflussung der Luftströme Lges; TdL1 und TdI2 zu erwirken, ist in Fahrtrichtung A des Schiffs betrachtet die Einlassöffnung 15 in der ersten hinteren Haubenwand 14 angeordnet; das Gebläse 18 mit Kurbelwelle 19 und Schwungrad 24 benachbart der vorderen Haubenwand 14'. Zwischen dem Zuströmkanal 39 und dem Gebläse 18 ergibt sich durch diese Anordnung ein prinzipieller Wirkungsbereich Wb -Fig.3- im Innenraum 13 der Abdeckhaube 12. In diesem Wirkungsbereich Wb wird der Teil der Luftströme TdI 1 an den Oberflächen OfL 1 bis Ofl 4 der Brennkraftmaschine 1 bzw. der Nebenaggregate mit definiertem Druck, hervorgerufen durch das Gebläse 18, vorbeigeleitet, so dass sich eine gezielte Kühlwirkung an den besagten Oberflächen OfL1 bis OfL 4 OfI 1bis 4 ergibt. Dazu ist das Gebläse 18 so ausgelegt, dass der Saugdruck ca. 2 bis 3 Mal höhere ist als Saugdruck der Sauganlage 30 der Brennkraftmaschine 2.

Das erste obere Schwungrad 24 mit Gebläse 18 ist mit einem ersten oberen zylindrischen Haubenabschnitt 40 abgedeckt; das zweite Schwungrad 25 mit einem unteren zylinderischen Haubenabschnitt 41. Der obere Haubenabschnitt 40 ist mit einer ersten Deckplatte 42 versehen, die eine Eintrittsöffnung 43 für die Zuluft des Gebläses 18 aufweist. Das Gebläse 18 verfügt über ein Laufradsystem 44 mit gemischter Strömung, Radialströmung oder dgl. Der untere Haubenabschnitt 41 besitzt eine zweite Deckplatte 45, die mit mehreren als radiale Schlitze dargestellt Durchgangsöffnungen 46 versehen sind. Der obere Haubenabschnitt 40 und der untere Haubenabschnitt 41, die die Schwungräder 24 und 25 verkleiden, sind als eine aus einem Stück hergestellte oder aus mehreren Teilen bestehende Gebläse-Schwungradabdeckung 47 ausgebildet. Sie umfasst z.B. vier Befestigungsaugen 48 und wird unter Vermittlung von Schrauben an verschiedenen Stellen an der Brennkraftmaschine 2 in Lage gehalten.

Der erste obere zylindrische Haubenabschnitt 40 für das erste obere mit dem Gebläse 18 vereinten Schwungrad 24 ist mit einer dritten Leiteinrichtung 49 versehen, an die ein spiralförmiger Tangentialkanalabschnitt 50 angeformt ist, der die vom Gebläse 18 angesaugten und geförderten Abluftsröme AL über einen Austrittskanal 51 des Tangentialkanalabschnitts 50 und die Auslassöffnung 16 in der Abdeckhaube 12 in die Atmosphäre bzw. an die Außenseite Aus leitet.

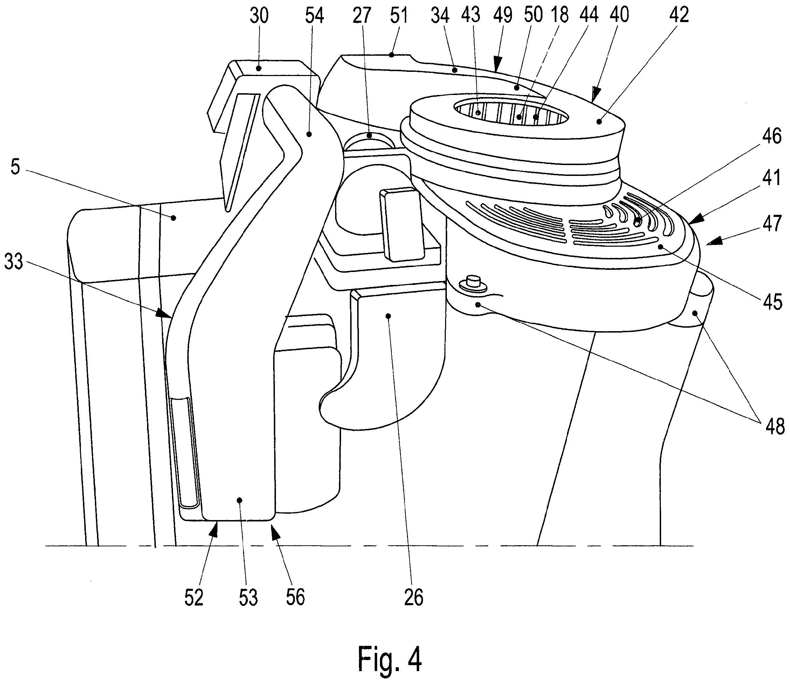

Die zweite Leiteinrichtung 33 zur Sauganlage 30 hin umfasst im Ausführungsbeispiel ein Rohrelement 52, das einen aufrechten Rohrelementabschnitt 53 und einen horizontalen Rohrelementabschnitt 54 besitzt -Fig. 4-. Die aus einem Stück hergestellten Rohrelementabschnitte 53 und 54 verlaufen mit Abstand zur Brennkraftmaschine 1 und besitzen eine T-förmige Gestaltt. Das Rohrelement 52 mit dem horizontalen Rohrelementabschnitt 54 ist unter Vermittlung eines Anschlusselements 55 -Fig. 7- an die Sauganlage 30 angeschlossen. Das Anschlusselement 55 ist mit dem von der Abgasturbine 29 angetriebene Verdichter 28 der Abgasturboladereinrichtung 27 verbunden. Der aufrechte Rohrelementabschnitt 53 beginnt mit einem Eintrittsbereich 56 benachbart der Unterseite 6 der Brennkraftmaschine 1.

Das Verfahren zum Betrieb des Lüftführungssystems 31 umfasst nachstehende Schritte:
a.) die Luftströme Lges treten über eine an einem oberen Endbereich Ebo einer hinteren Haubenwand 14 der Abdeckhaube 12 liegenden Einlassöffnung 15 in eine erste Leiteinrichtung 32 ein und werden von dort mittels besagter ersten Leiteinrichtung 32 in Richtung Unterseite 6 und Innenraum 13 der Abdeckhaube 12 hin geführt,
b.) das Luftführungssystem 31 fördert mit Unterstützung des benachbart der vorderen Haubenwand 14' an der Brennkraftmaschine 2 angebrachten Gebläses 18 die Luftströme Lges,
c.) ein erster Teil der Luftströme TdL1 wird unter dem Einfluss des Gebläses 18 an Oberflächen OfL 1 bis OfL4 der Brennkraftmaschine 2 bzw. Nebenaggregate 9, 10 und 11 vorbeigeführt, wobei das Gebläse 18 die erwärmten Luftströme Lsw ansaugt und unter Vermittlung einer dritten Leiteinrichtung 34 und einer Auslassöffnung 16 in der Abdeckhaube 12 als Abluft AL an die Außenseite Aus der Abdeckhaube bzw. in die Atmosphäre verbringt.
d.) ein zweiter Teil von Luftströmen TdL2 wird als Ansaugluft über eine zweite Leiteinrichtung 33 einer Sauganlage 30 der Brennkraftmaschine 2 zugeführt

## Patentansprüche

1. Brennkraftmaschine für einen Außenbordmotor zum Antrieb eines Schiffs mit einem Luftführungssystem, das unter Vermittlung von einer Oberflächen der Brennkraftmaschine und Nebenaggregate umgebenden Abdeckhaube wirksam ist, welche Abdeckhaube mit einer oder mehreren Ein- und Auslassöffnungen für in einem Innenraum der Abdeckhaube bewegte Luftströme versehen ist, wobei ein über die Brennkraftmaschine angetriebenes Gebläse die Luftströme im Innenraum der Abdeckhaube zumindest teilweise beeinflusst, **dadurch gekennzeichnet, dass** über eine Einlassöffnung (16) und eine daran anschließende erste Leiteinrichtung (32) Luftströme (Lges) in den Innenraum (13) der Abdeckhaube (12) eindringen und das Luftführungssystem (31) in der Weise fungiert, dass mit Unterstützung des Gebläses (18) ein Teil der Luftströme (TdL1) die Oberflächen (OfL1, OfL2, OfL3 und OfL4) der Brennkraftmaschine (2) und der Nebenaggregate (9, 10 und 11) beaufschlagen und ein anderer Teil der Luftströme (TdL2) als Ansaugluft mittels einer zweiten Leiteinrichtung (33) an eine Sauganlage (30) der Brennkraftmaschine (2) gelangt, wobei die von den Oberflächen (OfL1 bis OfL4) der Brennkraftmaschine (2) und den Nebenaggregaten (9. 10 und 11) erwärmten Luftströme (Lsw) vom Gebläse (18) und eine dritte Leiteinrichtung (34) als Abluft (AL) über eine Auslassöffnung (16) in der Abdeckhaube (12) an eine Außenseite (Aus) der besagten Abdeckhaube (12) bzw. in die Atmosphäre gefördert wird.

2. Brennkraftmaschine nach Anspruch 1, **dadurch gekennzeichnet, dass** die Einlassöffnung (15) an einer aufrechten Haubenwand (14) an einem oberen Endbereich (Ebo) der Abdeckhaube (12) angeordnet ist, wobei die erste Leiteinrichtung (32) sich in Richtung Unterseite (6) der Brennkraftmaschine (2) erstreckt und einen Überströmbereich (35) für die Luftströme (Lges) zum Innenraum (13) hin aufweist.

3. Brennkraftmaschine nach Anspruch 2, **dadurch gekennzeichnet, dass** die erste Leiteinrichtung (32) durch einen Haubenwandabschnitt (37) der Haubenwand (14) und eine Innenwand (38) der Abdeckhaube (12) gebildet wird, wobei der Haubenwandabschnitt (37) und eine aufrechte Innenwand (38) einen Zuströmkanal (39) für die Luftströme (Lges) bilden.

4. Brennkraftmaschine nach Anspruch 1, **dadurch gekennzeichnet, dass** das Gebläse (18) unter Vermittlung einer aufrechten über sie Oberseite (5) der Brennkraftmaschine (2) hinausragende aufrechte Kurbelwelle (19) angetrieben wird.

5. Brennkraftmaschine nach den Ansprüchen 1, 2 und 4, **dadurch gekennzeichnet, dass** in Fahrtrichtung (A) des Schiffs betrachtet die Einlassöffnung (15) an der hinten liegenden Haubenwand (14) und das Gebläse (18) an der Kurbelwelle (19) benachbart einer vorderen Haubenwand (14')angeordnet sind.

6. Brennkraftmaschine nach den Ansprüchen 4, **dadurch gekennzeichnet, dass** die das Gebläse antreibende als erste Kurbelwelle (19) zusammen mit einer zweiten parallel zur ersten Kurbelwelle (19) verlaufenden zweiten Kurbelwelle (20) ein Kurbelwellensystem (21) der Brennkraftmaschine (2) bildet, bei dem die Kurbelwellen (19 und 20) über zwei Pleuel mit wenigstens einem Hubkolben in Wirkverbindung stehen.

7. Brennkraftmaschine nach den Ansprüchen 6, **dadurch gekennzeichnet, dass** die die quer zur Fahrtrichtung (A) angeordneten Kurbelwellen (19 und 20) an ihren über die Oberseite (5) hinausragenden oberen Enden erste und zweite Schwungräder (24 und (25) aufweisen, die in Höhenrichtung (B-B) der Kurbelwellen (19 und 20) betrachtet versetzt zueinander angeordnet sind und sich bereichsweise überlappen, wobei das Gebläse (18) mit dem ersten oberen Schwungrad (24) baulich vereinigt ist.

8. Brennkraftmaschine nach den Ansprüchen 2 und 4, **dadurch gekennzeichnet, dass** das erste obere Schwungrad (24) mit Gebläse (18) und das zweite untere Schwungrad (24) mit einem ersten oberen Haubenabschnitt (40) bzw. einem unteren zweiten Haubenabschnitt (42) abgedeckt sind, die als eine aus einem Stück hergestellte oder aus mehreren Teilen bestehende Gebläse-Schwungradabdeckung (47) ausgebildet sind.

9. Brennkraftmaschine nach den Ansprüchen 1, 4 und 6, **dadurch gekennzeichnet, dass** der erste das Gebläse (18) verkleidende Haubenabschnitt (40) mit einer dritten Leiteinrichtung (49) versehen ist, der über einen spiralförmigen Tangentialkanalabschnitt (50) der Gebläse-Schwungradabdeckung (47) verfügt, welcher Tangentialabschnitt (50) die vom Gebläse (18) geförderte Abluft (AL) mittels der Auslassöffnung (16) an die Außenseite (Aus) der Abdeckhaube (12) bzw. in die Atmosphäre führt.

10. Brennkraftmaschine nach den Ansprüchen 7 und 8, **dadurch gekennzeichnet, dass** der zweite untere Haubenabschnitt (42) eine zweite horizontalen Deckelplatte (45) mit einer oder mehreren Durchgangsöffnungen (46) in Form von radialen Schlitzen aufweist.

11. Brennkraftmaschine nach den Ansprüchen 1 bis 5, **dadurch gekennzeichnet, dass** das Gebläse (18) ein Laufradsystem (44) mit gemischter Strömung, Radialströmung oder dgl. aufweist.

12. Brennkraftmaschine nach Anspruch 1, **dadurch gekennzeichnet, dass** die zweite Leiteinrichtung (33) zur Sauganlage (30) der Brennkraftmaschine (2) hin ein Rohrelement (53) umfasst, das sich zwischen der Unterseite (5) der Brennkraftmaschine (2) und der an der Oberseite (6) der Brennkraftmaschine liegenden Sauganlage (30) erstreckt.

13. Brennkraftmaschine nach Anspruch 12, **dadurch gekennzeichnet, dass** das Rohrelement (53) der zweiten Leiteinrichtung (33) mit einer Mündungseinrichtung an eine mit der Sauganlage (30) verbundenen Verdichter (2) einer Abgasturboladeeinrichtung (27) der Brennkraftmaschine (2) angeschlossen ist.

14. Brennkraftmaschine nach den Ansprüchen 10 und 11, **dadurch gekennzeichnet, dass** ein benachbart der Unterseite (6) der Brennkraftmaschine (2) beginnender der aufrechter Rohrelementabschnitt (54) des Rohrelements (52) mit wenigstens einem Eintrittsbereich (56) versehen ist.

15. Verfahren zum Betrieb eines Luftführungssystems in einem Innenraum einer einen Außenbordmotor umhüllenden Abdeckhaube, der eine Brennkraftmaschine zum Antrieb eines Schiffs umfasst, welche Abdeckhaube Einlass- und Auslassöffnungen aufweist, über die Luftströme in den Innenraum der Abdeckhaube eintreten bzw. aus diesem austreten, wobei die Brennkraftmaschine und Nebenaggregate von letzterer über Oberflächen sowie eine Sauganlage verfügt und darüber hinaus mittels eines von der Brennkraftmaschine angetriebenen Gebläses die Luftströme beeinflusst werden, **dadurch gekennzeichnet, dass**
a.) die Luftströme Lges über eine an einem oberen Endbereich (Ebo) einer hinteren Haubenwand (14) der Abdeckhaube (12) liegenden Einlassöffnung (15) in eine erste Leiteinrichtung (32) eintreten und von dort mittels besagter ersten Leiteinrichtung (32) in Richtung Unterseite (6) und Innenraum (13) der Abdeckhaube (12) hin geführt werden,
b.) das Luftführungssystem (31) mit Unterstützung des benachbart der vorderen Haubenwand (14') an der Brennkraftmaschine (2) angebrachten Gebläses (18) die Luftströme Lges beeinflusst,
c.) ein erster Teil der Luftströme (TdI1) unter dem Einfluss des Gebläses (18) an Oberflächen (OfL 1 bis OfL4) der Brennkraftmaschine 2 bzw. Nebenaggregate vorbeigeführt wird, wobei das Gebläse (18) die erwärmten Luftströme (Lsw) ansaugt und unter Vermittlung einer dritten Leiteinrichtung (34) und einer Auslassöffnung (16) in der Abdeckhaube (12) als Abluft (AL) an die Außenseite (Aus) der besagten Abdeckhaube (12) bzw. in die Atmosphäre verbringt,
d.) ein zweiter Teil von Luftströmen (TdI2) unter dem Einfluss des Gebläses (18) als Ansaugluft über eine zweite Leiteinrichtung (33) einer Sauganlage (30) der Brennkraftmaschine (2) zugeführt wird.
